# DEMANDE DE BREVET EUROPEEN

(11) **EP 1 598 229 A1**
(43) Date de publication de la demande: **23.11.2005**
(21) Numéro de dépôt: 05300383.6
(22) Date de dépôt: 18.05.2005
(51) Int. Cl.: B60J 7/11

(54) **Véhicule automobile comportant un pavillon équipé d'un panneau articulé**

(30) Priorité: 18.05.2004 FR 0450989
(71) Demandeur: Renault s.a.s., 92100 Boulogne Billancourt (FR)
(72) Inventeur: Vasseur, Patrice, 75007, Paris (FR)

(57) **Abrégé**

L'invention concerne un véhicule automobile comportant un pavillon (12) muni d'au moins une ouverture (14), du type dans lequel l'ouverture (14) est fermée par au moins un panneau mobile (26) dont la surface externe (30) est sensiblement affleurante avec la peau extérieure (16) du pavillon (12), du type dans lequel le panneau (26) est monté articulé au voisinage du bord transversal avant (18) de l'ouverture (14) par des moyens d'articulation (34) de sorte que le panneau (26) pivote autour d'un axe géométrique transversal (A1) entre une position fermée et au moins une position entrebâillée, caractérisé en ce que l'axe géométrique d'articulation (A1) du panneau (26) est agencé au voisinage de l'arête externe (38) du bord transversal avant (44) du panneau (26), et en ce que les moyens d'articulation (34) sont constitués par au moins une patte d'articulation (40) et au moins un logement de guidage (42) qui reçoit la patte d'articulation (40).

## Description

La présente invention concerne un véhicule automobile.

La présente invention concerne plus particulièrement un véhicule automobile comportant un pavillon muni d'au moins une ouverture globalement rectangulaire, du type dans lequel l'ouverture est délimitée, dans la peau extérieure du pavillon, par deux bords transversaux sensiblement continus, respectivement avant et arrière, et deux bords sensiblement longitudinaux, respectivement gauche et droit, du type dans lequel l'ouverture est fermée par au moins un panneau mobile dont la surface externe est sensiblement affleurante avec la peau extérieure du pavillon, du type dans lequel le panneau est monté articulé au voisinage du bord transversal avant, ou arrière, de l'ouverture par des moyens d'articulation de sorte que le panneau pivote autour d'un axe géométrique transversal entre une position fermée et au moins une position entrebâillée.

On connaît déjà des véhicules équipés d'un tel type de panneau mobile.

En général, le pavillon comporte un panneau en matériau transparent qui est lié au pavillon par deux charnières d'articulation agencées au voisinage du bord transversal avant du panneau.

Ce type de panneau mobile n'est pas complètement satisfaisant car les charnières d'articulation ne permettent pas un démontage facile du panneau, lorsque l'on souhaite que l'ouverture soit entièrement dégagée.

De plus, ce type de panneau est difficile à agencer dans le pavillon lorsque celui-ci a une forme bombée, et que l'on souhaite qu'il conserve un aspect extérieur lisse et sans arêtes.

L'invention vise à remédier à ces inconvénients en proposant une solution simple, économique, et efficace.

Dans ce but, l'invention propose un véhicule automobile du type décrit précédemment, caractérisé en ce que l'axe géométrique d'articulation du panneau est agencé au voisinage de l'arête externe du bord transversal avant, ou arrière, du panneau, et en ce que les moyens d'articulation sont constitués par :
- au moins une patte d'articulation qui est agencée au voisinage du bord transversal avant, ou arrière, du panneau, qui s'étend longitudinalement vers l'avant, respectivement vers l'arrière, et qui comporte une surface inférieure convexe dont le profil, dans un plan longitudinal vertical, a globalement la forme d'un arc de cercle centré sur l'axe géométrique d'articulation,
- et au moins un logement de guidage qui est agencé dans le bord transversal avant, respectivement arrière, de l'ouverture, qui est prévu pour recevoir la patte d'articulation associée, et qui comporte une surface d'appui sensiblement complémentaire de la surface inférieure convexe de la patte d'articulation.

Selon d'autres caractéristiques de l'invention :
- la patte d'articulation a globalement la forme d'une plaque recourbée formant un "C" ouvert vers le haut, et le logement de guidage comporte une surface transversale de retenue qui s'étend en vis-à-vis de la surface d'appui de manière à retenir verticalement la patte contre la surface d'appui ;
- le logement de guidage comporte une tige cylindrique transversale dont une portion de la surface axiale constitue la surface transversale de retenue ;
- la face inférieure du panneau comporte, au voisinage du bord transversal arrière, respectivement avant, un moyen de liaison à géométrie variable avec le pavillon de manière à permettre le verrouillage du panneau dans sa position fermée et de manière à permettre le pivotement du panneau jusqu'à sa position entrebâillée, et le moyen de liaison constitue le seul moyen de fixation du panneau sur le pavillon ;
- le moyen de liaison comporte un moyen de fixation amovible sur le pavillon, et le moyen de fixation amovible comporte un état verrouillé qui permet le pivotement du panneau entre sa position fermée et sa position entrebâillée, et un état déverrouillé qui permet de libérer le panneau pour le faire pivoter au-delà de sa position entrebâillée en vue de démonter le panneau ;
- l'ouverture est fermée par un panneau avant et par un panneau arrière qui sont adjacents par leurs bords transversaux, respectivement arrière et avant, et le panneau avant est articulé du côté de son bord transversal avant et le panneau arrière est articulé du côté de son bord transversal arrière ;
- le panneau arrière comporte au moins un moyen de verrouillage latéral pour sa fixation sur le pavillon, et le moyen de liaison entre le panneau avant et le pavillon est fixé de manière amovible sur le panneau arrière.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement un véhicule automobile réalisé conformément aux enseignements de l'invention comportant une ouverture fermée par un panneau avant et un panneau arrière démontables ;
- la figure 2 est une vue selon le plan de coupe 2-2 qui représente schématiquement les panneaux en position fermée dans l'ouverture ;
- la figure 3 est une vue similaire à celle de la figure 2 qui représente schématiquement le panneau avant en position entrebâillée et le panneau arrière en position fermée ;
- la figure 4 est une vue similaire à celle de la figure 2 qui représente schématiquement le panneau avant dans une position angulaire de démontage et le panneau arrière en position fermée ;
- la figure 5 est une vue similaire à celle de la figure 2 qui représente schématiquement le panneau arrière en position basculée vers l'arrière permettant son démontage, le panneau avant étant démonté ;
- la figure 6 est une vue d'un détail de la figure 3 qui illustre un moyen d'articulation du panneau avant lorsque le panneau avant occupe sa position angulaire de démontage.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

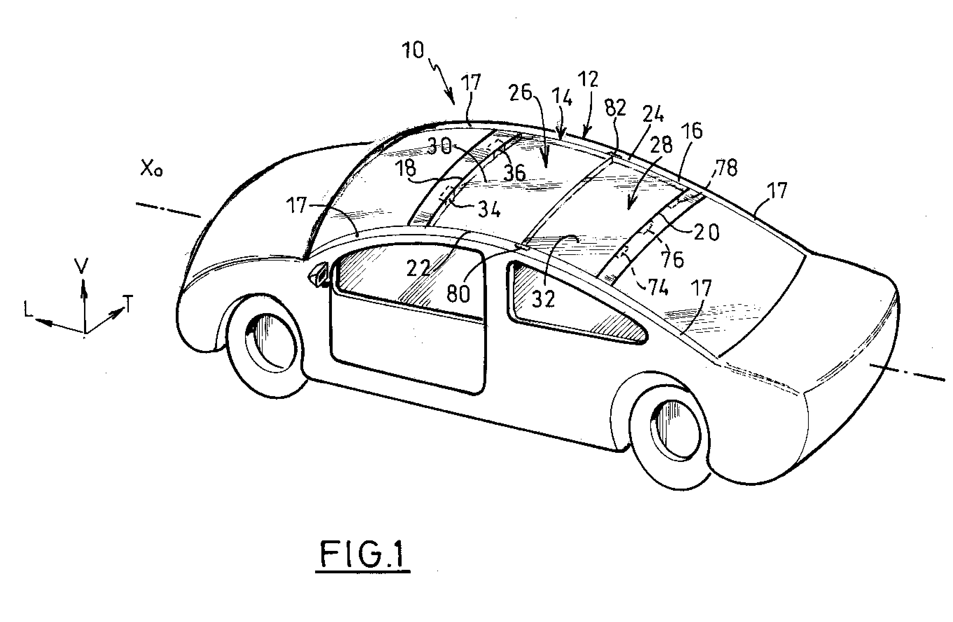

Sur la figure 1 on a représenté un véhicule automobile 10 qui est réalisé conformément aux enseignements de l'invention.

L'axe longitudinal X0 du véhicule 10 est orienté de l'arrière vers l'avant ce qui correspond globalement à une orientation de la droite vers la gauche en considérant la figure 1, suivant la direction L du repère V, L, T.

Le véhicule 10 comporte un pavillon 12, formant le toit de l'habitacle du véhicule 10, qui est muni d'une ouverture 14 globalement rectangulaire.

Comme on peut le voir, notamment sur les vues de côté des figures 2 à 5, le pavillon 12 est du type à forme bombée, c'est-à-dire que le profil de la peau extérieure 16 du pavillon 12, dans un plan longitudinal vertical, a la forme d'un arc de cercle, et que la courbure des montants 17 de pare-brise avant et de lunette arrière prolonge la courbure du pavillon 12.

L'ouverture 14 est délimitée, dans la peau extérieure 16 du pavillon 12, par deux bords transversaux sensiblement continus, respectivement avant 18 et arrière 20, et deux bords sensiblement longitudinaux, respectivement gauche 22 et droite 24.

Selon le mode de réalisation représenté ici, l'ouverture 14 est fermée par un panneau mobile avant 26 et par un panneau fixe arrière 28, la surface externe 30, 32 de chaque panneau 26, 28 étant sensiblement affleurante avec la peau extérieure 16 du pavillon 12.

De préférence, les panneaux avant 26 et arrière 28 sont réalisés dans un matériau transparent tel que du verre ou du polycarbonate.

Les panneaux avant 26 et arrière 28 sont adjacents par leurs bords transversaux, respectivement arrière 27 et avant 29.

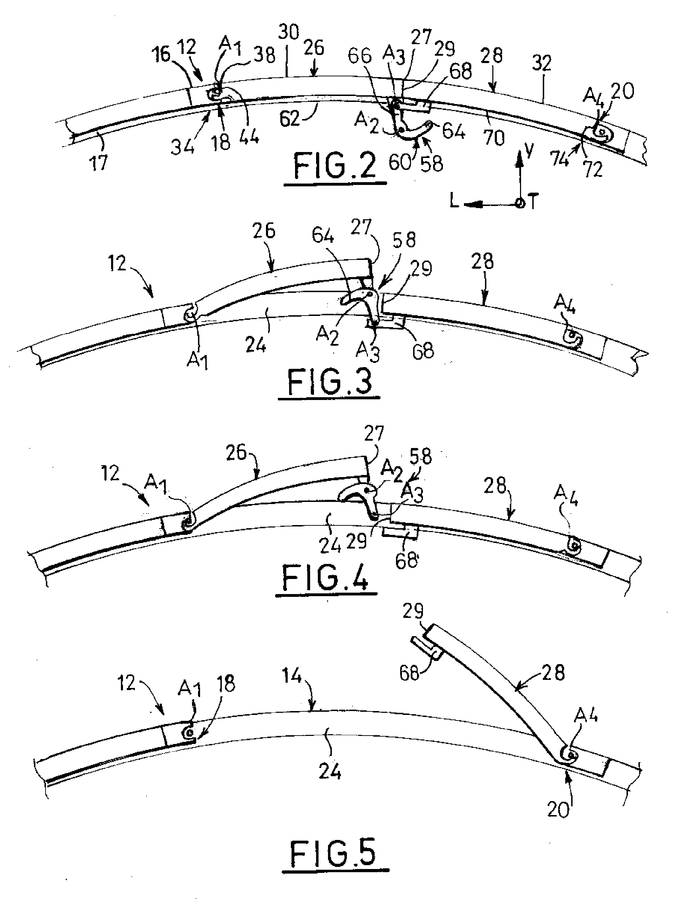

Le panneau avant 26 est monté articulé au voisinage du bord transversal avant 18 de l'ouverture 14 par des moyens d'articulation gauche 34 et droite 36 de sorte que le panneau 26 pivote autour d'un axe géométrique transversal avant A1 entre une position fermée, qui est représentée sur les figures 1 et 2, et au moins une position entrebâillée, qui est représentée sur la figure 3.

Conformément aux enseignements de l'invention, l'axe d'articulation avant A1 est agencé au voisinage de l'arête externe 38 du bord transversal avant 44 du panneau avant 26.

Selon une autre caractéristique de l'invention, chacun des moyens d'articulation 34, 36 du panneau avant 26 est constitué par une patte d'articulation 40 qui est reçue dans un logement de guidage 42 associé.

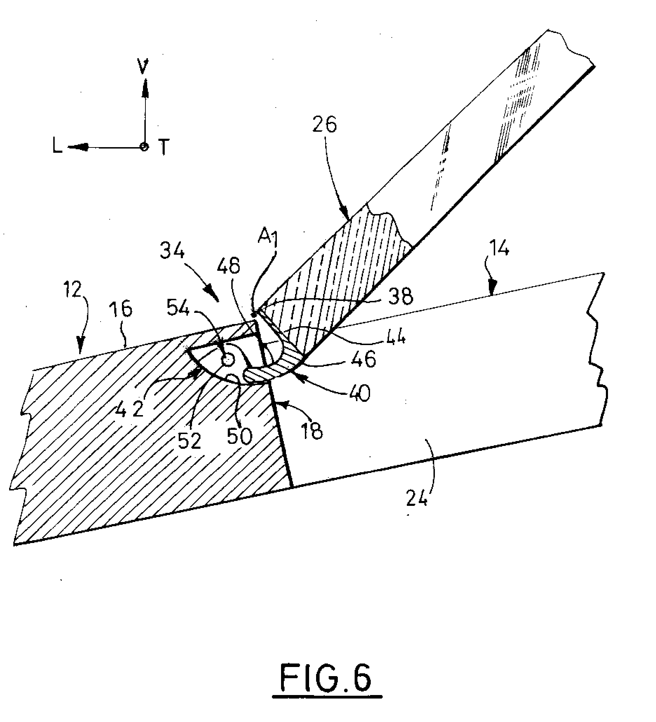

La structure des moyens d'articulation 34, 36 sera mieux comprise en considérant la figure 6 qui représente le moyen d'articulation gauche 34 du panneau avant 26.

La patte d'articulation 40 est agencée au voisinage du bord transversal avant 44 du panneau avant 26, et elle s'étend longitudinalement vers l'avant.

La patte d'articulation 40 comporte une surface inférieure 46 convexe dont le profil, dans un plan longitudinal vertical, a globalement la forme d'un arc de cercle centré sur l'axe d'articulation avant A1.

La patte d'articulation 40 a ici la forme d'une plaque transversale ou languette cintrée de manière à former un profil en "C" ouvert vers le haut, de sorte qu'elle comporte une surface supérieure 48 concave de profil similaire à celui de la surface inférieure 46.

Le logement de guidage 42 est agencé dans le bord transversal avant 18 de l'ouverture 14 et il est ouvert vers l'arrière.

Le logement de guidage 42 comporte une surface d'appui 50 sensiblement complémentaire de la surface inférieure 46 convexe de la patte d'articulation 40, de manière à permettre le guidage par glissement de la patte d'articulation 40 contre la surface d'appui 50 du logement 42.

De préférence, le logement de guidage 42 comporte une surface transversale de retenue 52 qui s'étend en vis-à-vis de la surface d'appui 50 de manière à retenir verticalement la patte d'articulation 40 contre la surface d'appui 50.

La surface transversale de retenue 52 est formée ici par une portion de la surface axiale d'une tige cylindrique transversale 54 qui s'étend à l'intérieur du logement de guidage 42.

Avantageusement, le panneau avant 26 comporte, au voisinage de son bord transversal arrière 27, un moyen de liaison 58 à géométrie variable avec le pavillon 12 de manière à permettre le verrouillage du panneau avant 26 dans sa position fermée et de manière à permettre le pivotement du panneau avant 26 jusqu'à sa position entrebâillée.

Le moyen de liaison 58 constitue ici le seul moyen de fixation du panneau avant 26 sur le pavillon 12.

Le moyen de liaison 58 comporte une poignée de commande 60 qui est montée pivotante autour d'un axe transversal A2 sur la face inférieure 62 du panneau avant 26.

La poignée 60 comporte un élément de préhension 64 et un élément de liaison 66 qui est monté à pivotement autour d'un axe transversal A3 sur une platine 68 qui est fixée sur la face inférieure 70 du panneau arrière 28.

L'élément de liaison 66 est monté de manière amovible sur la platine 68, de manière à permettre de désolidariser le panneau avant 26 du panneau arrière 28.

L'élément de liaison 66 comporte donc un état verrouillé, qui est représenté sur les figures 2, 3, et 4, et un état déverrouillé, qui est représenté sur la figure 4.

Avantageusement, le panneau arrière 28 est monté articulé sur le pavillon 12 par son bord transversal arrière 72 par l'intermédiaire de moyens d'articulation respectivement gauche 74, médian 76, et droite 78 qui sont similaires aux moyens d'articulation 34, 36 du panneau avant 26.

Le panneau arrière 28 comporte, en outre, des moyens latéraux de verrouillage respectivement gauche 80 et droit 82 pour sa fixation sur les bords longitudinaux 22, 24 du pavillon 12. Ces moyens latéraux de verrouillage 80, 82 sont agencés ici au voisinage du bord transversal avant 29 du panneau arrière 28, de manière à bloquer le panneau arrière 28 en position fermée dans l'ouverture 14.

Lorsque les moyens latéraux de verrouillage 80, 82 sont déverrouillés, il devient possible de faire pivoter le panneau arrière 28 autour d'un axe géométrique transversal arrière A4, de manière à faire sortir les pattes d'articulation 40 de leurs logements 42 associés, pour permettre de retirer complètement le panneau arrière 28 de l'ouverture 14.

On note que le panneau arrière 28 est fixé sur le pavillon 12 uniquement par l'intermédiaire des moyens latéraux de verrouillage 80, 82, ces moyens 80, 82 coopérant avec les moyens d'articulation 74, 76, 78 pour retenir le panneau arrière 28 en position fermée.

Le fonctionnement des panneaux 26, 28 est le suivant.

A partir de la position complètement fermée, qui est représentée sur les figures 2 et 3, l'utilisateur manipule la poignée 60 en la faisant pivoter autour de son axe A2 de manière à faire pivoter le panneau avant 26 autour de l'axe d'articulation avant A1, dans le sens anti-horaire en considérant les figures 2 et 3, jusqu'à la position entrebâillée qui est représentée sur la figure 3.

Pendant le pivotement du panneau avant 26, la surface inférieure convexe 46 de chaque patte d'articulation 40 est en contact glissant avec la surface d'appui 50 du logement de guidage 42 associé, ce qui permet de guider la patte d'articulation 40 dans le logement de guidage 42.

Pendant ce pivotement, la patte d'articulation 40 est retenue verticalement dans le logement 42 par la tige transversale 54.

Dans la position entrebâillée, le panneau avant 26 est toujours lié au panneau arrière 28 qui occupe sa position fermée, donc le panneau avant 26 est lié au pavillon 12 par l'intermédiaire de ses moyens d'articulation 34, 36 et par l'intermédiaire du panneau arrière 28.

Lorsque l'utilisateur souhaite démonter le panneau avant 26, il lui suffit de désolidariser la poignée 60 de la platine 68, puis de faire pivoter le panneau avant 26 autour de l'axe d'articulation avant A1, dans le sens anti-horaire en considérant les figures 2 et 4, jusqu'à une position angulaire de démontage, qui est représentée sur la figure 4 et dans laquelle ses pattes d'articulation 40 sont sorties des logements de guidage 42.

La position angulaire de démontage est située angulairement au-delà de la position entrebâillée.

Dans la position angulaire de démontage, comme on peut le voir sur la figure 6, l'extrémité libre de chaque patte d'articulation 40 se trouve décalée longitudinalement vers l'arrière par rapport à la tige transversale 54, de sorte que la patte d'articulation 40 n'est plus retenue verticalement dans le logement de guidage 42 associé.

L'utilisateur peut ensuite ranger le panneau avant 26 et conserver le pavillon 12 tel quel, c'est-à-dire avec l'ouverture 14 partiellement fermée par le panneau arrière 28 qui est verrouillé.

Lorsque l'utilisateur souhaite démonter le panneau arrière 28, il lui suffit de déverrouiller les moyens latéraux de verrouillage 80, 82, puis de faire pivoter le panneau arrière 28 autour de son axe d'articulation arrière A4, dans le sens horaire en considérant les figures 4 et 5, jusqu'à une position angulaire de démontage qui est représentée sur la figure 5 et dans laquelle ses pattes d'articulation 40 sont sorties des logements de guidage 42.

L'utilisateur peut ensuite ranger le panneau arrière 28 et conserver le pavillon 12 tel quel, c'est-à-dire avec l'ouverture 14 complètement ouverte.

Le remontage des panneaux 26, 28 sur le pavillon 12 s'effectue en réalisant les opérations décrites précédemment dans un ordre inversé.

On note que, selon le présent mode de réalisation, le panneau arrière 28 est prévu pour être démonté en dernier et remonté en premier, par rapport au panneau avant 26.

Avantageusement, la surface externe 30, 32 des panneaux 26, 28 est affleurante avec la peau extérieure 16 du pavillon 12 et les bords périphériques des panneaux 26, 28 sont sensiblement adjacents aux bords périphériques de l'ouverture 14, ce qui confère au pavillon 12 un aspect extérieur lisse et continu bénéfique notamment à l'aérodynamisme du véhicule 10.

Grâce à l'agencement de l'axe d'articulation A1, A4 de chaque panneau 26, 28 au voisinage de l'arête externe 38 de son bord transversal 44 associé, les panneaux 26, 28 peuvent pivoter autour de leurs axes d'articulation A1, A4 respectifs sans interférer avec le bord transversal 18, 20 associé de l'ouverture 14 du pavillon 12.

## Revendications

1. Véhicule automobile (10) comportant un pavillon (12) muni d'au moins une ouverture (14) globalement rectangulaire, du type dans lequel l'ouverture (14) est délimitée, dans la peau extérieure (16) du pavillon (12), par deux bords transversaux sensiblement continus, respectivement avant (18) et arrière (20), et deux bords sensiblement longitudinaux, respectivement gauche (22) et droite (24), du type dans lequel l'ouverture (14) est fermée par au moins un panneau mobile (26) dont la surface externe (30) est sensiblement affleurante avec la peau extérieure (16) du pavillon (12), du type dans lequel le panneau (26) est monté articulé au voisinage du bord transversal avant (18), ou arrière, de l'ouverture (14) par des moyens d'articulation (34, 36) de sorte que le panneau (26) pivote autour d'un axe géométrique transversal (A1) entre une position fermée et au moins une position entrebâillée,
**caractérisé en ce que** l'axe géométrique d'articulation (A1) du panneau (26) est agencé au voisinage de l'arête externe (38) du bord transversal avant (44), ou arrière, du panneau (26), et **en ce que** les moyens d'articulation (34, 36) sont constitués par :
- au moins une patte d'articulation (40) qui est agencée au voisinage du bord transversal avant (44), ou arrière, du panneau (26), qui s'étend longitudinalement vers l'avant, respectivement vers l'arrière, et qui comporte une surface inférieure convexe (46) dont le profil, dans un plan longitudinal vertical, a globalement la forme d'un arc de cercle centré sur l'axe géométrique d'articulation (A1),
- et au moins un logement de guidage (42) qui est agencé dans le bord transversal avant (18), respectivement arrière, de l'ouverture (14), qui est prévu pour recevoir la patte d'articulation (40) associée, et qui comporte une surface d'appui (50) sensiblement complémentaire de la surface inférieure convexe (46) de la patte d'articulation (40).

2. Véhicule automobile (10) selon la revendication précédente, **caractérisé en ce que** la patte d'articulation (40) a globalement la forme d'une plaque recourbée formant un "C" ouvert vers le haut, et **en ce que** le logement de guidage (42) comporte une surface transversale de retenue (52) qui s'étend en vis-à-vis de la surface d'appui (50) de manière à retenir verticalement la patte (54) contre la surface d'appui (50).

3. Véhicule automobile (10) selon la revendication précédente, **caractérisé en ce que** le logement de guidage (42) comporte une tige cylindrique transversale (54) dont une portion de la surface axiale constitue la surface transversale de retenue (52).

4. Véhicule automobile (10) selon l'une quelconque des revendications précédentes, **caractérisé en ce que** la face inférieure (62) du panneau (26) comporte, au voisinage du bord transversal arrière (27), respectivement avant, un moyen de liaison (58) à géométrie variable avec le pavillon (12) de manière à permettre le verrouillage du panneau (26) dans sa position fermée et de manière à permettre le pivotement du panneau (26) jusqu'à sa position entrebâillée, et **en ce que** le moyen de liaison (58) constitue le seul moyen de fixation du panneau (26) sur le pavillon (12).

5. Véhicule automobile (10) selon la revendication précédente, **caractérisé en ce que** le moyen de liaison (58) comporte un moyen de fixation amovible (66) sur le pavillon (12), et **en ce que** le moyen de fixation amovible (66) comporte un état verrouillé qui permet le pivotement du panneau (26) entre sa position fermée et sa position entrebâillée, et un état déverrouillé qui permet de libérer le panneau (26) pour le faire pivoter au-delà de sa position entrebâillée en vue de démonter le panneau (26).

6. Véhicule automobile (10) selon l'une quelconque des revendications précédentes, **caractérisé en ce que** l'ouverture (14) est fermée par un panneau avant (26) et par un panneau arrière (28) qui sont adjacents par leurs bords transversaux, respectivement arrière (27) et avant (29), et **en ce que** le panneau avant (26) est articulé du côté de son bord transversal avant (44) et le panneau arrière (28) est articulé du côté de son bord transversal arrière.

7. Véhicule automobile (10) selon la revendication précédente prise en combinaison avec la revendication 5, **caractérisé en ce que** le panneau arrière (28) comporte au moins un moyen de verrouillage latéral (80, 82) pour sa fixation sur le pavillon (12), et **en ce que** le moyen de liaison (58) entre le panneau avant (26) et le pavillon (12) est fixé de manière amovible sur le panneau arrière (28).
